# EUROPÄISCHE PATENTSCHRIFT

(11) **EP 3 140 101 B1**
(45) Veröffentlichungstag und Bekanntmachung des Hinweises auf die Patenterteilung: **28.08.2024**
(21) Anmeldenummer: 15709958.1
(22) Anmeldetag: 16.03.2015
(51) Int. Cl.: B29C 65/82, B29C 65/60

(54) **VERFAHREN ZUM FÜGEN VON MEHREREN WERKSTÜCKTEILEN SOWIE FÜGEWERKZEUG**
METHOD FOR JOINING A PLURALITY OF WORKPIECE PARTS AND JOINING TOOL
PROCÉDÉ D'ASSEMBLAGE DE PLUSIEURS PARTIES D'UNE PIÈCE ET OUTIL D'ASSEMBLAGE

(30) Priorität: 07.05.2014 DE 102014208512
(43) Veröffentlichungstag der Anmeldung: 15.03.2017
(73) Patentinhaber: Bayerische Motoren Werke Aktiengesellschaft, 80809 München (DE)
(72) Erfinder: WAGNER, Julia, 85748 Garching (DE); WILHELM, Maximilian, 87439 Kempten (DE)
(86) Internationale Anmeldenummer: PCT/EP2015/055427
(87) Internationale Veröffentlichungsnummer: WO 2015/169492

(56) Entgegenhaltungen:
- JP-A- 2004 001 071
- US-A- 5 260 766
- US-A1- 2007 034 313

## Beschreibung

Die Erfindung betrifft ein Verfahren zum Fügen von Karosseriebauteilen, sowie ein Fügewerkzeug.

Zur Überprüfung der Qualität der Fügepunkte eines aus mehreren Werkstückteilen gefügten Werkstücks, z.B. eines Karosseriebauteils, ist eine zerstörungsfreie Prüfung, zumindest stichprobenartig, unerlässlich. Im Karosseriebau findet eine zerstörungsfreie Prüfung von gefügten Werkstücken im Anschluss an die Produktion statt. Dazu wird ein zufällig ausgewähltes Fahrzeug meist ausgeschleust und per Hand geprüft. Jedoch werden nie alle gefügten Werkstücke bzw. Fügepunkte jedes Fahrzeugs geprüft, sondern die zerstörungsfreie Prüfung wird immer nur an Einzelfahrzeugen und an einzelnen Fügepunkten durchgeführt.

Der Einsatz von faserverstärkten Kunststoffen im Karosseriebau nimmt immer mehr zu. Anders als beim Fügen von Werkstückteilen aus Stahl ist das Fügen von Werkstückteilen komplexer und weist höhere Ausschussraten auf. Um ein hohes Maß an Qualität weiterhin gewährleisten zu können, muss die Anzahl der stichprobenartigen Prüfungen entsprechend erhöht werden, was jedoch kosten- und zeitintensiv ist.

Die US 5 260 766 A offenbart ein Verfahren zum Verbinden zweier Plastikbögen durch Hitze, z. B. zur Herstellung von Nahrungsmittelverpackungen in der Nahrungsmittelindustrie. Die beiden Plastikbögen werden durch ein Heißsiegel miteinander verbunden, wobei in dem Werkzeug zur Erzeugung des Heißsiegels eine Beleuchtungsvorrichtung vorgesehen ist, die das erzeugte Heißsiegel durchleuchten kann. Die Beleuchtung ist Teil einer Prüfvorrichtung, die eingeschlossene Nahrungsreste im Heißsiegel erkennen kann.

Die JP 2004 001071 A zeigt ein Verfahren zum Fügen zweier Bauteile mittels einer Zwischenschicht zwischen den Bauteilen, die bei Lasereinstrahlung schmilzt, wodurch die beiden Bauteile miteinander verklebt werden. Neben dem Laser kann ein Ultraschalldetektor vorgesehen sein, der die Dicke der Zwischenschicht detektiert. Anhand der ermittelten Dicke wird der Laserstrahl zum Schmelzen dieser Schicht eingestellt.

Die US 2007/0034313 A1 offenbart eine Vorrichtung zum Applizieren eines faserverstärkten Bandes auf ein Werkstück, wobei die Vorrichtung eine optische Überprüfungsvorrichtung aufweist, die das auf dem Werkstück applizierte Band auf Defekte hin untersuchen kann.

Der Erfindung liegt die Aufgabe zugrunde, eine Möglichkeit der Überprüfung von gefügten Werkstücken zu ermöglichen, die ohne großen Kosten- und Zeitaufwand in die Produktion zu integrieren ist.

Die Aufgabe wird gelöst durch ein Verfahren zum Fügen von Karosseriebauteilen, bei dem
a) die Werkstückteile in ein Fügewerkzeug eingelegt werden,
b) die Werkstückteile im Fügewerkzeug auf Beschädigungen hin geprüft werden,
c) die Werkstückteile durch das Fügewerkzeug gefügt werden, und
d) das gefügte Werkstück im Fügewerkzeug auf Beschädigungen hin geprüft wird.

Durch die Prüfung der Werkstückteile und des geprüften Werkstücks im Fügewerkzeug selbst ist es ohne großen Zeitaufwand möglich, die Werkstückteile beziehungsweise das gefügte Werkstück auf Beschädigungen hin zu überprüfen. Zudem kann jedes der zu fügenden Werkstückteile und der gefügten Werkstücke geprüft werden, sodass die Qualitätskontrolle der Werkstücke, im Gegensatz zu stichprobenartigen Prüfungen, deutlich verbessert wird.

Die Werkstückteile können unmittelbar vor und das gefügte Werkstück kann unmittelbar nach dem Fügen, insbesondere durch eine im Fügewerkzeug vorgesehene Prüfvorrichtung, geprüft werden, sodass neu auftretende Beschädigungen zweifelsfrei auf das Fügen zurückzuführen sind.

Beispielsweise ist wenigstens eines der mehreren Werkstückteile aus einem faserverstärkten Kunststoff hergestellt, sodass das gefügte Werkstückteil von den Vorteilen eines faserverstärkten Kunststoffes profitieren kann.

Vorzugsweise wird, wenn eine kritische Beschädigung eines der Werkstückteile oder des gefügten Werkstücks erkannt wurde, dieses Werkstückteil oder das gefügte Werkstück aussortiert, sodass Bauteile mit zu großen Beschädigungen frühestmöglich erkannt und nicht weiterverwendet werden. Typische Beschädigungen in einem faserverstärktem Kunststoff, die beim Fügen eingebracht werden, sind Delamination oder Zwischenfaserbrüche.

In einer Ausführungsvariante werden die Beschädigungen der Werkstückteile vor dem Fügen mit den Beschädigungen des gefügten Werkstücks nach dem Fügen verglichen, die durch das Fügen entstandene Beschädigung wird ermittelt und das gefügte Werkstück wird aussortiert, wenn die durch das Fügen entstandene Beschädigung kritisch ist. Die im automobilen Karosseriebau verwendeten Werkstückteile weisen in der Regel bereits einen gewissen Grad an Unregelmäßigkeiten auf, beispielsweise durch das Einbringen von Löchern. Deshalb ist es nicht möglich, ein absolutes Schadensmaß zur Qualitätskontrolle eines gefügten Werkstücks als Grenze für eine kritische Beschädigung zu setzen. Durch den Vergleich der Beschädigungen der Werkstückteile vor dem Fügen und den Beschädigungen des gefügten Werkstückteils kann auf die durch das Fügen selbst entstandene Beschädigung geschlossen werden, sodass diese separat bewertet werden kann. Auf diese Weise wird die Beurteilung der durch das Fügen entstandenen Beschädigungen wesentlich differenzierter. Dabei wird eine Beschädigung zum Beispiel als kritisch angesehen, wenn die durch das Fügen entstandene Beschädigung die Größe der Unregelmäßigkeiten vor dem Fügen in kritischem Maße überschreitet, insbesondere dann, wenn die als nicht kritisch eingestuften Unregelmäßigkeiten vor dem Fügen in ihrer Größe mehr als 2-fach durch die durch das Fügen erzeugte Beschädigung zugenommen hat. Auch kann insbesondere das Größenverhältnis der Unregelmäßigkeiten vor dem Fügen zur Beschädigung nach dem Fügen zueinander als Grenzwert definiert werden.

In einer Ausgestaltung der Erfindung werden die Werkstückteile und/oder das gefügte Werkstück mittels Luftultraschall, Kontaktultraschall, akustischer Emission, Thermographie und/oder eines anderen zerstörungsfreien Verfahrens geprüft. Diese Verfahren sind erprobt und bekannt, sodass ihr Einsatz kostengünstig ist.

In einer Ausführungsform der Erfindung weist das Fügewerkzeug einen Stempel und eine Matrize auf, wobei die Werkstückteile auf Beschädigung überprüft werden, wenn der Stempel auf dem Werkstückteil aufsitzt und/oder das gefügte Werkstück auf Beschädigungen überprüft wird, wenn das Fügewerkzeug vollständig geschlossen ist. Auf diese Weise ist eine voll automatisierte und zeitsparende Überprüfung der Werkstückteile und/oder des gefügten Werkstücks möglich.

In einer Ausführungsvariante können bei einseitigen Fügeverfahren die Werkstückteile auf Beschädigungen überprüft werden, wenn der Stempel auf einem der Werkstückteile aufsitzt oder in einem Abstand von weniger als 3,0 mm zu einem der Werkstückteile positioniert ist. Auf diese Weise kann das Werkstückteil auch ohne Kontakt geprüft werden.

Beispielsweise wird vor Schritt b) ein Kopplungsmittel zwischen Stempel und einem der Werkstückteile automatisiert zugeführt wird, wodurch die Qualität der Prüfung verbessert wird.

Vorzugsweise wird nach Schritt d) das Kopplungsmittel zwischen Stempel und dem Werkstück automatisiert abgeführt, sodass das gefügte Werkstück frei von Kopplungsmittelrückständen ist.

Die Beurteilung, ob eine Beschädigung kritisch ist, kann automatisiert erfolgen, insbesondere durch den Vergleich der bei den Prüfungen erhaltenen Muster miteinander und/oder mit einem Grenzmuster, wodurch der Personalaufwand der Prüfung und somit die anfallenden Kosten stark verringert werden können. Der Vergleich der erhaltenen Muster miteinander und/oder mit einem Grenzmuster kann mittels einer Bildverarbeitungssoftware geschehen, wobei die Größe der Unterschiede zwischen den erhaltenen Mustern untereinander oder zwischen den erhaltenen Mustern und dem Grenzmuster als ein Maß der Beschädigung verwendet werden kann.

In einer Ausgestaltung der Erfindung werden in einer Datenbank die bei der Prüfung erhaltenen Muster zusammen mit Informationen über das Endprodukt, beispielsweise der Fahrgestellnummer bei Fahrzeugen, in dem das gefügte Werkstück verbaut wurde, hinterlegt. Auf diese Weise ist es möglich, bei späteren Reklamationen des Käufers die Qualität des gefügten Werkstücks nachweisen zu können.

Die Aufgabe wird ferner durch ein Fügewerkzeug gemäß Anspruch 13 gelöst. Durch das Fügewerkzeug ist es möglich, ohne zusätzliche Transportschritte der Werkstückteile oder des gefügten Werkstücks eine Prüfung der Werkstückteile und/oder des gefügten Werkstücks durchzuführen. Zudem ist eine Prüfung der Werkstückteile und/oder des Werkstücks direkt in der Produktionsanlage möglich.

Vorzugsweise ist die Prüfvorrichtung zur Prüfung mittels Luftultraschall, Kontaktultraschall, akustischer Emission und/oder eines anderen zerstörungsfreien Verfahrens ausgebildet, insbesondere ist die Prüfvorrichtung ein Phased Array Ultraschallkopf, wodurch bekannte, preisgünstige und qualitativ hochwertige Prüfvorrichtungen verwendet werden können.

Das Fügewerkzeug kann eine Halbhohlstanznietzange sein.

Weitere Vorteile und Merkmale der Erfindung ergeben sich aus der nachfolgenden Beschreibung sowie aus den beigefügten Zeichnungen, auf die Bezug genommen wird. In den Zeichnungen zeigen:
- Figur 1 ein erfindungsgemäßes Fügewerkzeug in offener Position im Schnitt,
- Figur 2 das erfindungsgemäße Fügewerkzeug nach Figur 1 mit eingelegten Werkstückteilen, und
- Figur 3 das erfindungsgemäße Fügewerkzeug nach Figur 1 in vollständig geschlossener Position.

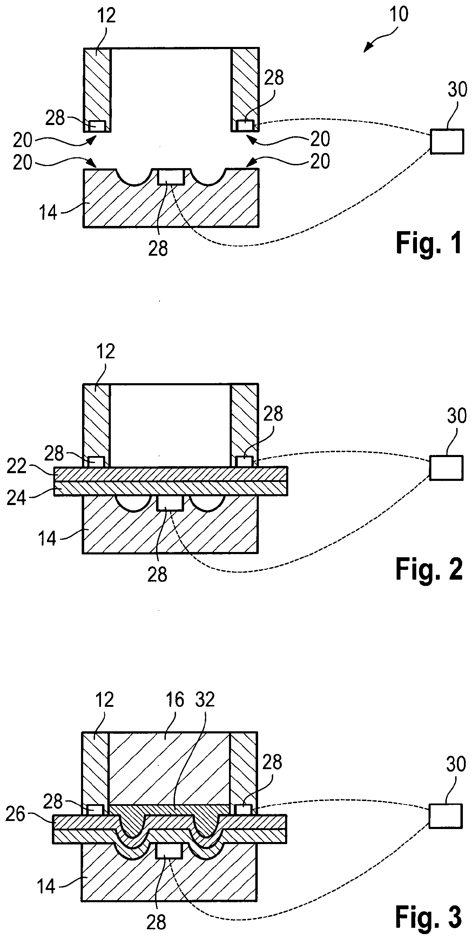

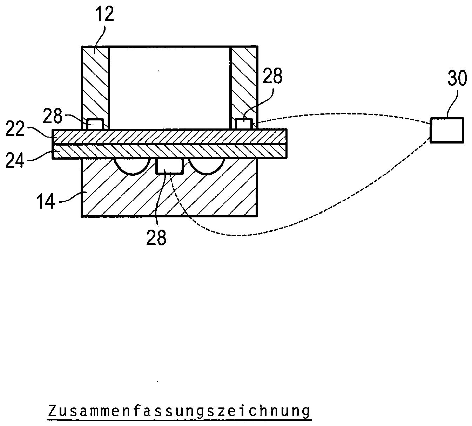

In Figur 1 ist im Schnitt ein Fügewerkzeug 10 zum Fügen von mehreren Werkstückteilen, insbesondere Karosseriebauteilen, schematisch dargestellt.

Das Fügewerkzeug 10 kann ein Umformwerkzeug, beispielsweise eine Halbhohlstanznietzange sein.

Auch kann das Fügewerkzeug 10 zum Fügen von Werkstückteilen aus faserverstärktem Kunststoff ausgebildet sein.

Das Fügewerkzeug 10 weist einen Stempel 12 und eine Matrize 14 auf, wobei der Stempel 12 gegenüber der Matrize 14 verschiebbar ist.

Der Stempel 12 ist zylinderförmig und beispielsweise hohl ausgeführt und dient zur Führung eines Bolzens 16 (Figur 3).

Die der Matrize zugewandte Fläche des Stempels 12 sowie die dem Stempel 12 zugewandte Seite der Matrize 14 bilden Werkstückanlageflächen 20, an denen bei der Verwendung des Fügewerkzeugs 10 die zu fügenden Werkstückteile 22, 24 (Figur 2) bzw. das gefügte Werkstück 26 (Figur 3) anliegen.

An den Werkstückanlageflächen 20 sind sowohl am Stempel 12 als auch an der Matrize 14 zumindest eine Prüfvorrichtung 28 vorgesehen.

Die Prüfvorrichtung 28 ist zur Prüfung mittels Luftultraschall, Kontaktultraschall, akustischer Emission und/oder eines anderen zerstörungsfreien Verfahrens ausgebildet.

Die Prüfvorrichtung 28 ist beispielsweise ein Phased Array Ultraschallkopf.

Denkbar ist selbstverständlich auch, dass nur am Stempel 12 oder nur an der Matrize 14 eine Prüfvorrichtung 28 vorgesehen ist.

Auch ergibt sich die Größe, Lage und/oder die Orientierung der Prüfvorrichtungen 28 aus der Geometrie der Werkstückanlageflächen 20 und der zu prüfenden Werkstückteile 22, 24 bzw. der Fügepunkte.

Die Prüfvorrichtungen 28 stehen mit einer Auswerteeinheit 30, beispielsweise eine Steuerung des Fügewerkzeugs 10, in Verbindung. In den Zeichnungen ist dies durch eine gestrichelte Linie angedeutet.

Die Prüfvorrichtung 28 kann zusammen mit der Auswerteeinheit 30 die zu fügenden Werkstückteile 22, 24 und/oder das gefügte Werkstück 26 auf Beschädigungen hin überprüfen.

Zum Fügen von mehreren Werkstücken 22, 24 werden die zu fügenden Werkstückteile 22, 24 in das Fügewerkzeug 10 eingelegt. Dabei kann wenigstens eines der Werkstückteile 22, 24 aus einem faserverstärkten Kunststoff hergestellt sein.

Nun kann ein Kopplungsmittel (nicht gezeigt), beispielsweise Kontaktgel, zwischen dem Stempel 12 und einem der Werkstückteile 22, 24 automatisiert zugeführt werden.

Das aufgebrachte Kontaktmittel kann nach dem Fügen auch automatisiert abgeführt werden. Das Fügewerkzeug 10 wird nun so weit geschlossen, dass der Stempel 12 auf dem ihm näher liegenden Werkstückteil 22 aufsitzt. Diese Position ist in Figur 2 dargestellt. In dieser Position liegen nun die Prüfvorrichtungen 28 an den Werkstückteilen 22 bzw. 24 an und können die Werkstückteile 22, 24 im Fügewerkzeug 10 auf Beschädigungen hin prüfen.

Die Prüfung der Werkstückteile 22, 24 erfolgt also unmittelbar vor dem Fügen.

Die Prüfung der Werkstückteile 22, 24 und anschließend des gefügten Werkstücks 26 erfolgt mittels Luftultraschall, Kontaktultraschall, akustischer Emission, Thermografie und/oder eines anderen zerstörungsfreien Verfahrens.

Beispielsweise, wie in dem Fall, dass die Prüfvorrichtungen 28 Phased Array Ultraschallköpfe sind, erhält man durch die Prüfung ein Muster des geprüften Werkstückteils 22, 24, das dann an die Auswerteeinheit 30 übermittelt werden kann.

Die bei der Prüfung erhaltenen Muster der Werkstückteile 22, 24 werden in der Auswerteeinheit 30 hinterlegt.

Eine Beurteilung, ob eine Beschädigung, d.h. Unregelmäßigkeit der Werkstückteile 22, 24 kritisch ist, kann beispielsweise dadurch vorgenommen werden, dass das erhaltene Muster mit einem Grenzmuster, das im Speicher der Auswerteeinheit 30 hinterlegt ist, verglichen wird und die Beschädigung als kritisch angesehen wird, wenn sich das erhaltene Muster sich über ein bestimmtes Maß hinaus vom entsprechenden Grenzmuster unterscheidet.

Diese Beurteilung kann von der Auswerteeinheit 30 automatisiert vorgenommen werden.

Wird bei einem der Werkstückteile 22, 24 eine kritische Beschädigung erkannt, wird dieses Werkstückteil 22, 24 aussortiert.

Das heißt, dass das Fügewerkzeug 10 wieder geöffnet wird und das beschädigte Werkstückteil 22, 24 entnommen und ersetzt wird.

Wenn beide Werkstückteile 22, 24 keine kritischen Beschädigungen aufweisen, werden die Werkstückteile 22, 24 durch das Fügewerkzeug 10 gefügt.

In der gezeigten Ausführungsform wird mittels eines Bolzens 16 ein Niet 32 in die Werkstückteile 22, 24 eingeführt, wie in Figur 3 zu erkennen ist.

Auf diese Weise wird das gefügte Werkstück 26 aus den beiden Werkstückteilen 22, 24 erhalten.

Die in Figur 3 gezeigte Position des Fügewerkzeugs 10 entspricht der vollständig geschlossenen Position, in der durch die Prüfvorrichtungen 28 das gefügte Werkstück 26 auf Beschädigungen hin geprüft wird.

Die Prüfung des gefügten Werkstücks 26 erfolgt also unmittelbar nach dem Fügen.

Auch die bei der Prüfung des gefügten Werkstücks 26 erhaltenen Muster können an die Auswerteeinheit 30 übermittelt werden, in der sie mit einem Grenzmuster für gefügte Werkstücke, das in der Auswerteeinheit 30 hinterlegt ist, verglichen werden.

Weicht das bei der Prüfung erhaltene Muster zu stark vom Grenzmuster ab, wird auf eine kritische Beschädigung des gefügten Werkstücks 26 geschlossen und das gefügte Werkstück 26 aussortiert, das heißt nicht weiter verwendet.

Auch können in der Auswerteeinheit 30 die Muster der einzelnen Werkstückteile 22, 24 mit dem Muster des gefügten Werkstücks 26 verglichen werden und aus den Unterschieden der Muster auf die durch das Fügen entstandene Beschädigung geschlossen werden.

Der Vergleich der erhaltenen Muster miteinander und/oder mit einem Grenzmuster kann mittels einer Bildverarbeitungssoftware geschehen, wobei die Größe der Unterschiede zwischen den erhaltenen Mustern untereinander oder zwischen den erhaltenen Mustern und dem Grenzmuster als ein Maß der Beschädigung verwendet werden kann.

Überschreitet die beim Fügen entstandene Beschädigung eine vorbestimmte Grenze, so wird das gefügte Werkstück 26 ebenfalls aussortiert.

Dabei kann insbesondere das Größenverhältnis der beiden Beschädigungen zueinander als Grenzwert definiert werden.

Beispielsweise wir eine Beschädigung als kritisch angesehen, wenn die durch das Fügen entstandene Beschädigung die Größe der Anfangsschädigung in kritischem Maße überschreitet, insbesondere dann, wenn die als nicht kritisch eingestufte Anfangsschädigung in ihrer Größe mehr als 2-fach durch die durch das Fügen erzeugte Beschädigung zugenommen hat.

Typische Beschädigungen in einem faserverstärktem Kunststoff, die beim Fügen eingebracht werden, sind Delamination oder Zwischenfaserbrüche.

Auch das erhaltene Muster des gefügten Werkstücks 26 kann in der Auswerteeinheit 30 hinterlegt werden.

Außerdem kann das erhaltene Muster des gefügten Werkstücks 26 zusammen mit den Mustern der einzelnen Werkstückteile 22, 24 in einer Datenbank hinterlegt und mit Informationen über das Endprodukt, in dem das gefügte Werkstück 26 verwendet wurde, verknüpft werden. Die Information über das Produkt kann beispielsweise die Fahrgestellnummer des Fahrzeugs sein, in dem das gefügte Werkstück 26 verbaut wurde, sodass im Falle von Reklamationen auf die Muster der Werkstückteile 22, 24 und des gefügten Werkstücks 26 zurückgegriffen werden kann.

Denkbar ist selbstverständlich auch, dass es sich bei dem Fügewerkzeug 10 um ein anderes Fügewerkzeug als die gezeigte Halbhohlstanznietzange handelt.

Selbstverständlich können auch mehr als die gezeigten zwei Werkstückteile durch das Fügewerkzeug miteinander verbunden werden, ohne vom Gedanken der Erfindung abzuweichen.

Denkbar ist auch, dass das Fügewerkzeug 10 bei einseitigen Fügeverfahren die Werkstückteile 22, 24 auf Beschädigungen überprüft, wenn der Stempel 12 auf einem der Werkstückteile 22, 24 aufsitzt oder in einem Abstand von weniger als 3,0 mm zu einem der Werkstückteile 22, 24 positioniert ist.

## Patentansprüche

1. Verfahren zum Fügen von Karosseriebauteilen (22, 24), aus faserverstärkten Kunststoffen bei dem
a) die Werkstückteile (22, 24) in ein Fügewerkzeug (10) eingelegt werden,
b) die Werkstückteile (22, 24) im Fügewerkzeug (10) auf Beschädigungen hin geprüft werden,
c) die Werkstückteile (22, 24) durch das Fügewerkzeug (10) gefügt werden, und
d) das gefügte Werkstück (26) im Fügewerkzeug (10) auf Beschädigungen hin geprüft wird.

2. Verfahren nach Anspruch 1, **dadurch gekennzeichnet, dass** die Werkstückteile (22, 24) unmittelbar vor und das gefügte Werkstück (26) unmittelbar nach dem Fügen, insbesondere durch eine im Fügewerkzeug (10) vorgesehene Prüfvorrichtung (28), geprüft wird.

3. Verfahren nach Anspruch 1 oder 2, **dadurch gekennzeichnet, dass** wenigstens eines der mehreren Werkstückteile (22, 24) aus einem faserverstärkten Kunststoff hergestellt ist.

4. Verfahren nach einem der vorhergehenden Ansprüche, **dadurch gekennzeichnet, dass**, wenn eine kritische Beschädigung eines der Werkstückteile (22, 24) oder des gefügten Werkstücks (26) erkannt wurde, dieses Werkstückteil (22, 24) oder das gefügte Werkstück (26) aussortiert wird.

5. Verfahren nach einem der vorhergehenden Ansprüche, **dadurch gekennzeichnet, dass** die Beschädigungen der Werkstückteile (22, 24) vor dem Fügen mit den Beschädigungen des gefügten Werkstücks (26) nach dem Fügen verglichen werden, die durch das Fügen entstandene Beschädigung ermittelt wird, und das gefügte Werkstück (26) aussortiert wird, wenn die durch das Fügen entstandene Beschädigung kritisch ist.

6. Verfahren nach einem der vorhergehenden Ansprüche, **dadurch gekennzeichnet, dass** die Werkstückteile (22, 24) und/oder das gefügte Werkstück (26) mittels Luftultraschall, Kontaktultraschall, akustischer Emission, Thermographie und/oder eines anderen zerstörungsfreien Verfahrens geprüft werden.

7. Verfahren nach einem der vorhergehenden Ansprüche, **dadurch gekennzeichnet, dass** das Fügewerkzeug (10) einen Stempel (12) und eine Matrize (14) aufweist, wobei die Werkstückteile (22, 24) auf Beschädigungen überprüft werden, wenn der Stempel (12) auf einem der Werkstückteile (22, 24) aufsitzt und/oder das gefügte Werkstück (26) auf Beschädigungen überprüft wird, wenn das Fügewerkzeug (10) vollständig geschlossen ist.

8. Verfahren nach einem der Ansprüche 1 bis 6, **dadurch gekennzeichnet, dass** das Fügewerkzeug (10) bei einseitigen Fügeverfahren die Werkstückteile (22, 24) auf Beschädigungen überprüft, wenn der Stempel (12) auf einem der Werkstückteile (22, 24) aufsitzt oder in einem Abstand von weniger als 3,0 mm zu einem der Werkstückteile (22, 24) positioniert ist.

9. Verfahren nach Anspruch 7 oder 8, **dadurch gekennzeichnet, dass** vor Schritt b) ein Kopplungsmittel zwischen dem Stempel (12) und einem der Werkstückteile (22, 24) automatisiert zugeführt wird.

10. Verfahren nach Anspruch 9, **dadurch gekennzeichnet, dass** nach Schritt d) das Kopplungsmittel zwischen dem Stempel (12) und dem gefügten Werkstück (26) automatisiert abgeführt wird.

11. Verfahren nach einem der vorhergehenden Ansprüche, **dadurch gekennzeichnet, dass** die Beurteilung, ob eine Beschädigung kritisch ist, automatisiert erfolgt, insbesondere durch Vergleich der durch die Prüfungen erhaltenen Muster miteinander und/oder mit einem Grenzmuster.

12. Verfahren nach einem der vorhergehenden Ansprüche, **dadurch gekennzeichnet, dass** die bei der Prüfung erhaltenen Muster zusammen mit Informationen über das Endprodukt, in dem das gefügte Werkstück (26) verwendet wurde, in einer Datenbank hinterlegt werden.

13. Fügewerkzeug zum Fügen von mehreren Werkstückteilen (22, 24) aus faserverstärktem Kunststoff, mit wenigstens einer Prüfvorrichtung (28), die an einer der Werkstückanlageflächen (20) des Fügewerkzeugs (10) ausgebildet ist, **dadurch gekennzeichnet, dass** das Fügewerkzeug (10) ein Umformwerkzeug mit einem Stempel (12) und einer Matrize (14) ist, wobei die wenigstens eine Prüfvorrichtung (28) im Stempel (12) und/oder der Matrize (14) vorgesehen ist, wobei die Prüfvorrichtung (28) dazu ausgebildet ist, die Werkstückteile (22, 24) im Fügewerkzeug (10) vor dem Fügen auf Beschädigungen zu prüfen und das gefügte Werkstück (26) im Fügewerkzeug (10) auf Beschädigungen zu prüfen, wobei die Prüfvorrichtung (28) ferner dazu ausgebildet ist, ohne zusätzliche Transportschritte der Werkstückteile (22, 24) oder des gefügten Werkstücks (26) eine Prüfung der Werkstückteile (22, 24) und des gefügten Werkstücks (26) durchzuführen.

14. Fügewerkzeug nach Anspruch 13, **dadurch gekennzeichnet, dass** die Prüfvorrichtung (28) zur Prüfung mittels Luftultraschall, Kontaktultraschall, akustischer Emission und/oder eines anderen zerstörungsfreien Verfahrens ausgebildet ist, insbesondere ein Phased Array Ultraschallkopf ist.

15. Fügewerkzeug nach Anspruch 13 oder 14, **dadurch gekennzeichnet, dass** das Fügewerkzeug (10) eine Halbhohlstanznietzange ist.

## Claims

1. Method for joining bodywork components (22, 24) of fibre-reinforced plastics materials, in which method
a) the workpiece parts (22, 24) are placed in a joining tool (10),
b) the workpiece parts (22, 24) in the joining tool (10) are tested for damage,
c) the workpiece parts (22, 24) are joined by the joining tool (10), and
d) the joined workpiece (26) in the joining tool (10) is tested for damage.

2. Method according to Claim 1, **characterized in that** the workpiece parts (22, 24) are tested immediately prior to joining, and the joined workpiece (26) is tested immediately after joining, in particular by a testing device (28) provided in the joining tool (10).

3. Method according to Claim 1 or 2, **characterized in that** at least one of the plurality of workpiece parts (22, 24) is produced from a fibre-reinforced plastics material.

4. Method according to one of the preceding claims, **characterized in that**, if critical damage to one of the workpiece parts (22, 24) or to the joined workpiece (26) has been identified, this workpiece part (22, 24) or the joined workpiece (26) is eliminated.

5. Method according to one of the preceding claims, **characterized in that** the damage to the workpiece parts (22, 24) prior to joining is compared with the damage to the joined workpiece (26) after joining, the damage created as a result of joining is determined, and the joined workpiece (26) is eliminated if the damage created as a result of joining is critical.

6. Method according to one of the preceding claims, **characterized in that** the workpiece parts (22, 24) and/or the joined workpiece (26) are/is tested by means of air ultrasound, contact ultrasound, acoustic emission, thermography and/or any other non-destructive method.

7. Method according to one of the preceding claims, **characterized in that** the joining tool (10) has a ram (12) and a die (14), wherein the workpiece parts (22, 24) are tested for damage when the ram (12) sits on one of the workpiece parts (22, 24), and/or the joined workpiece (26) is tested for damage when the joining tool (10) is completely closed.

8. Method according to one of Claims 1 to 6, **characterized in that** the joining tool (10) in one-sided joining methods tests the workpiece parts (22, 24) for damage when the ram (12) sits on one of the workpiece parts (22, 24) or is positioned at a spacing of less than 3.0 mm from one of the workpiece parts (22, 24).

9. Method according to Claim 7 or 8, **characterized in that**, before step b), a coupling means between the ram (12) and one of the workpiece parts (22, 24) is supplied in an automated manner.

10. Method according to Claim 9, **characterized in that**, after step d), the coupling means between the ram (12) and the joined workpiece (26) is discharged in an automated manner.

11. Method according to one of the preceding claims, **characterized in that** the evaluation as to whether damage is critical is performed in an automated manner, in particular by comparing the samples obtained by the tests with one another and/or with a limiting sample.

12. Method according to one of the preceding claims, **characterized in that** the samples obtained in the test, conjointly with information pertaining to the final product in which the joined workpiece (26) was used, are stored in a database.

13. Joining tool for joining a plurality of workpiece parts (22, 24) of fibre-reinforced plastics material, having at least one testing device (28) which is formed on one of the workpiece contact faces (20) of the joining tool (10), **characterized in that** the joining tool (10) is a forming tool having a ram (12) and a die (14), wherein the at least one testing device (28) is provided in the ram (12) and/or the die (14), wherein the testing device (28) is designed to test the workpiece parts (22, 24) in the joining tool (10) for damage prior to joining and to test the joined workpiece (26) in the joining tool (10) for damage, wherein the testing device (28) is furthermore designed to carry out a test on the workpiece parts (22, 24) and on the joined workpiece (26) without additional transporting steps of the workpiece parts (22, 24) or of the joined workpiece (26).

14. Joining tool according to Claim 13, **characterized in that** the testing device (28) is designed for testing by means of air ultrasound, contact ultrasound, acoustic emission and/or any other non-destructive method, in particular is a phased array ultrasonic transducer.

15. Joining tool according to Claim 13 or 14, **characterized in that** the joining tool (10) is a semitubular self-piercing riveter.

## Revendications

1. Procédé d'assemblage de composants de carrosserie (22, 24) en matières plastiques renforcées par des fibres dans lequel
a) les parties de pièce (22, 24) sont placées dans un outil d'assemblage (10),
b) les parties de pièce (22, 24) sont contrôlées dans l'outil d'assemblage (10) pour vérifier qu'elles ne sont pas endommagées,
c) les parties de pièce (22, 24) sont assemblées par l'outil d'assemblage (10), et
d) la pièce assemblée (26) est contrôlée dans l'outil d'assemblage (10) pour vérifier qu'elle n'est pas endommagée.

2. Procédé selon la revendication 1, **caractérisé en ce que** les parties de pièce (22, 24) sont contrôlées immédiatement avant et la pièce assemblée (26) immédiatement après l'assemblage, notamment par un dispositif de contrôle (28) prévu dans l'outil d'assemblage (10).

3. Procédé selon la revendication 1 ou 2, **caractérisé en ce qu'**au moins une des plusieurs parties de pièce (22, 24) est fabriquée à partir d'une matière plastique renforcée par des fibres.

4. Procédé selon l'une quelconque des revendications précédentes, **caractérisé en ce que**, lorsqu'un endommagement critique d'une des parties de pièce (22, 24) ou de la pièce assemblée (26) est détecté, cette partie de pièce (22, 24) ou la pièce assemblée (26) est rejetée.

5. Procédé selon l'une quelconque des revendications précédentes, **caractérisé en ce que** les endommagements des parties de pièce (22, 24) avant l'assemblage sont comparés aux endommagements de la pièce assemblée (26) après l'assemblage, l'endommagement causé par l'assemblage est déterminé, et la pièce assemblée (26) est rejetée si l'endommagement causé par l'assemblage est critique.

6. Procédé selon l'une quelconque des revendications précédentes, **caractérisé en ce que** les parties de pièce (22, 24) et/ou la pièce assemblée (26) sont contrôlées par ultrasons aériens, ultrasons de contact, émission acoustique, thermographie et/ou toute autre méthode non destructive.

7. Procédé selon l'une quelconque des revendications précédentes, **caractérisé en ce que** l'outil d'assemblage (10) présente un poinçon (12) et une matrice (14), les parties de pièce (22, 24) étant contrôlées pour vérifier qu'elles ne sont pas endommagées lorsque le poinçon (12) repose sur l'une des parties de pièce (22, 24) et/ou la pièce assemblée (26) étant contrôlée pour vérifier qu'elle n'est pas endommagée lorsque l'outil d'assemblage (10) est complètement fermé.

8. Procédé selon l'une quelconque des revendications 1 à 6, **caractérisé en ce que** l'outil d'assemblage (10) contrôle si les parties de pièce (22, 24) sont endommagées dans le cas de procédés d'assemblage unilatéraux, lorsque le poinçon (12) repose sur l'une des parties de pièce (22, 24) ou est positionné à une distance inférieure à 3,0 mm de l'une des parties de pièce (22, 24).

9. Procédé selon la revendication 7 ou 8, **caractérisé en ce qu'**avant l'étape b), un moyen de couplage entre le poinçon (12) et l'une des parties de pièce (22, 24) est alimenté de manière automatisée.

10. Procédé selon la revendication 9, **caractérisé en ce qu'**après l'étape d), le moyen de couplage entre le poinçon (12) et la pièce assemblée (26) est évacué de manière automatisée.

11. Procédé selon l'une quelconque des revendications précédentes, **caractérisé en ce que** l'évaluation de si un endommagement est critique est effectuée de manière automatisée, notamment par comparaison des motifs obtenus par les contrôles entre eux et/ou avec un motif limite.

12. Procédé selon l'une quelconque des revendications précédentes, **caractérisé en ce que** les motifs obtenus lors du contrôle sont stockés dans une base de données conjointement avec des informations sur le produit final dans lequel la pièce assemblée (26) a été utilisée.

13. Outil d'assemblage pour assembler plusieurs parties de pièce (22, 24) en matière plastique renforcée par des fibres, avec au moins un dispositif de contrôle (28) qui est réalisé sur l'une des surfaces d'appui de pièce (20) de l'outil d'assemblage (10), **caractérisé en ce que** l'outil d'assemblage (10) est un outil de formage avec un poinçon (12) et une matrice (14), l'au moins un dispositif de contrôle (28) étant prévu dans le poinçon (12) et/ou la matrice (14), le dispositif de contrôle (28) étant réalisé pour contrôler que les parties de pièce (22, 24) ne sont pas endommagées dans l'outil d'assemblage (10) avant l'assemblage et pour contrôler que la pièce assemblée (26) n'est pas endommagée dans l'outil d'assemblage (10), le dispositif de contrôle (28) étant en outre réalisé pour effectuer un contrôle des parties de pièce (22, 24) et de la pièce assemblée (26) sans étapes de transport supplémentaires des parties de pièce (22, 24) ou de la pièce assemblée (26).

14. Outil d'assemblage selon la revendication 13, **caractérisé en ce que** le dispositif de contrôle (28) est réalisé pour un contrôle par ultrasons aériens, par ultrasons de contact, par émission acoustique et/ou par une autre méthode non destructive, notamment est une tête ultrasonique à réseau en phase.

15. Outil d'assemblage selon la revendication 13 ou 14, **caractérisé en ce que** l'outil d'assemblage (10) est une pince à rivets semi-creux.
